Europäisches Patentamt

European Patent Office

Office européen des brevets

(11) Publication number: **0 074 735**
**B1**

(12) **EUROPEAN PATENT SPECIFICATION**

(45) Date of publication of patent specification: **04.12.85**

(51) Int. Cl.⁴: **B 01 D 39/20** // C02F11/12

(21) Application number: **82304462.3**

(22) Date of filing: **24.08.82**

(54) Rigid sludge dewatering filter plate.

| | |
|---|---|
| (30) Priority: **27.08.81 US 296956** | (73) Proprietor: **EUROPEAN ENVIRONMENTAL PRODUCTS LTD.**<br>**10 Rodway Road**<br>**Bromley Kent BR1 3JL (GB)** |
| (43) Date of publication of application:<br>**23.03.83 Bulletin 83/12** | |
| (45) Publication of the grant of the patent:<br>**04.12.85 Bulletin 85/49** | (72) Inventor: **Roberts, Robert Lloyd**<br>**42W585 Steeplechase**<br>**St. Charles Illinois 60174 (US)**<br>Inventor: **Janssen, Felix Gerard**<br>**6000 North Ocean Boulevard Suite 16-A**<br>**Fort Lauderdale Florida 33308 (US)** |
| (84) Designated Contracting States:<br>**AT BE CH DE FR GB IT LI LU NL SE** | |
| (56) References cited:<br>CH-A- 272 243<br>DE-B-2 232 785<br>DE-C- 296 715<br>DE-C- 297 308<br>DE-C- 444 257<br>DE-C- 862 869<br>DE-C- 869 618<br>US-A-3 166 615<br>US-A-3 615 019<br>US-A-4 190 534 | (74) Representative: **Miller, Joseph et al**<br>**J. MILLER & CO. Lincoln House 296-302 High Holborn**<br>**London WC1V 7JH (GB)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a rigid sludge-dewatering filter plate and to an improved method for making such a rigid filter plate.

Sludge treatment processes provide means to reduce the volume and moisture content of waste water sludge to yield an easily handleable, relatively dry sludge cake. Efforts directed towards improving existing sludge-dewatering technology have not entirely overcome the inherent drawbacks of current filtration means. Many current filtration systems utilize loose sand or other non-bonded particulate matter as the filtering element. The filtering layer or loose sand does not possess the strength or durability of an adhesively bonded filtering element. Even those filter plates which have rigid surfaces are generally unable to withstand mechanized sludge cake removal by heavy equipment traversing the filtering element without such filter plates flaking, chipping, or breaking. In addition, most filter plates capable of use with vacuum filtration require frequent backwashing to maintain their efficacy.

The effectiveness of a sludge treatment process depends greatly upon the efficiency of the filtering medium. Efficiency comprises two separate but related functions of the filtering medium. First, the filter medium should permit maximum speed in the dewatering process; that is, permit rapid reduction of the volume and the moisture content of the sludge to yield a handleable, relatively dry sludge cake. Second, the filtering medium should produce a clear, clean, relatively solid-free effluent during the rapid dewatering process.

Clearly, filtering medium characteristics and properties profoundly affect the overall efficiency and cost of sludge treatment facilities. There is a need in the sludge treatment industry for a permanent filtering medium that provides fast, efficient dewatering and yet retains its structural integrity during repeated mechanized removal of the sludge cake. Many known filter media variously suffer from the disadvantage of meeting one of these requirements but not all of them, or are effective with a few types of sludges but not with a wide variety of sludge types.

Referring now to the prior art, U.S. Patent No. 4,190,534 to Wyatt teaches the use of a multilayer filter bed for filtering and removing sludge materials suspended in the waste water byproduct of steel pickling operations. The specification describes the use of sharp pointed particles to form the exposed surface of the filter. These sharp pointed particles spear the larger sludge masses during filtering. However, neither the particulate material constituting each layer of this filter nor the layers themselves are bonded by an adhesive bonding agent. Such a filter therefore does not possess enough rigidity, strength, or durability to permit mechanized removal of sludge cakes by heavy equipment such as front end loaders. Also, cleaning such a filtering element involves removal of its exposed surface. The citation gives no indication regarding the suitability of the filtering medium for those rapid dewatering systems which employ vacuum filtration means.

U.S. Patent No. 3,011,643 to McCoy teaches a sand filter apparatus for swimming pool applications utilizing a bonded lower support structure for the single layer of filtering sand. This filter is not used for sludge dewatering. It employs a single layer filtering medium composed of loose sand. There is no teaching or suggestion of vacuum filtration compatible with the disclosed filter. The single layer filtering medium is not bonded by an adhesive bonding agent nor does it possess an exposed surface of sharp pointed particles. U.S. Patents Nos. 3,847,808, 3,771,655 and 3,615,019 are of similar scope and are drawn from related subject matter areas but are even less pertinent.

U.S. Patent No. 3,166,615 to Farrell teaches a method of manufacturing a bonded multilayer porous structure capable of use as a mould for vacuum forming of pulp products. This method, however, is not related to sludge dewatering. The citation does not disclose the use of sharp pointed particles on the exposed surface of the filtering medium or an underlying support structure comprising particulate material bonded by an adhesive bonding agent. U.S. Patents Nos. 3,056,704, 2,293,099, 2,155,016 and 1,844,528 are drawn from the art related to bonding processes for minute particulate matter but are even less pertinent.

Until now no monolithic multilayer filtering medium for sludge treatment capable of withstanding the stresses and scraping action of repeated mechanized removal of the dried sludge has provided efficient means of producing handleable, relatively dry sludge cakes from a wide variety of types of sludges while maintaining a filtering action that produces clear, clean (relatively solid-free) effluent. The term "monolithic" is used to denote a rigid unified structure.

According to the present invention, there is provided a rigid sludge dewatering filter plate comprising at least a first layer and a second layer, the first layer constituting a flat filtering element consisting essentially of jagged irregular particles, and the second layer constituting a particulate support for the first layer, characterised in that the particles of the first layer are of a material or materials whose hardness on the Moh scale is at least 7 and which are bonded together with an adhesive bonding agent, the particles being of at least two sizes whose average diameter is within the range 0.01 cm to 0.23 cm and being arranged with the average particle size of the particles being less at an exposed dense upper surface of the first layer than at a lower surface thereof, the second layer having particles which are larger than the largest particles in the first layer, and the particles of the second layer being bonded together and to the lower surface of the first layer by an adhesive bonding agent.

The filter plate of the present invention is capable of essentially permanent installation in a rapid sludge dewatering system in which mechanical means are employed for sludge cake removal.

The jagged irregular particles of the first layer may be of one or more of the materials aluminium oxide, corundum, emery, garnet, silicon carbide, boron carbide, and manufactured crystalline alumina products.

Preferably, the jagged, irregular particles comprise at least three different sizes of particles.

The thickness of the first layer may be in the range of 0.32 cms to 5.08 cms and the thickness of the second layer may be in the range of 0.64 cms to 9.53 cms.

The diameters of the particles of the second layer may be in the range of 0.32 cms to 3.81 cms.

The second layer may be reinforced with reinforcing means.

The adhesive bonding agent is preferably a mixture of a low visosity epoxy resin and a hardener.

Preferably, the weight ratio of adhesive bonding agent to particles in the first layer is substantially between 1:8 and 1:20 and the weight ratio of adhesive bonding agent to particles in the second layer is substantially between 1:6 and 1:15.

The invention also comprises a method of manufacturing such a rigid sludge dewatering filter plate, the method comprising (a) mixing an adhesive bonding agent with inert particles of diameter greater than 0.23 cms to form a supporting element mixture; (b) introducing the supporting element mixture into a filter plate mould to a predetermined depth; (c) tamping the supporting element mixture in the mould; (d) mixing an adhesive bonding agent with jagged, irregular particles of at least two sizes within the range consisting essentially of 0.01 cms to 0.23 cms, wherein the particles are comprised of one or more materials whose hardness on the Moh scale is at least 7 to form a filtering element mixture; (e) introducing the filtering element mixture into the filter plate mould on top of the tamped supporting element mixture, (f) smoothing the upper surface of the filtering element mixture with smoothing means; (g) tamping the filtering element mixture in the mould; and (h) curing the resulting filter plate.

The rigid filter plate of the present invention possesses the strength and durability to withstand repeated removal of sludge cakes using heavy mechanized equipment and other physically abrasive means traversing the filter plate surface. Dewatering of the structural integrity of the filter surface during sludge cake removal is thus avoided.

The rigid filter plate of the present invention permits fast and efficient sludge dewatering while requiring substantially smaller amounts of the polymer agent used to coagulate and floc the sludge to be filtered.

The rigid filter plate of the present invention can, moreover, be used under vacuum filtration, wherein the problem of sludge masses being pulled into the larger voids, thus clogging or blinding the filter, is overcome.

The rigid filter plate of the present invention may utilise a filtering element which permits rapid filtration of waste water having sludge contents ranging from 0.1% to 10% solids.

The rigid filter plate of the present invention may be arranged to produce a clean, clear effluent having suspended solids ranging from 2 to 175 parts per million, preferably 2 to 10 parts per million (a capture rate of 99.99%), from a wide variety of sludges.

In the rigid filter plate of the present invention the exposed jagged irregular, hard particles will spear the larger sludge masses during gravity filtration, thus forming a secondary chemical filter, while at the same time providing a surface able to be more easily installed and completely cleaned during removal of the sludge.

The invention is illustrated, merely by way of example, in the accompanying drawings, in which:

Figure 1 is a pictorial view of a rigid filter plate made in accordance with the present invention,

Figures 2a, b and c are partial vertical crosssectional views of the filtering element and supporting element of the rigid filter plate of Figure 1,

Figure 3 is a horizontal cross-sectional view of the said supporting element reinforced with rods,

Figure 4 is a vertical cross-sectional view of the same supporting element reinforced with rods, and

Figure 5 is a horizontal cross-sectional view of the supporting element of a filter plate of the present invention reinforced with wire mesh.

Terms such as "top" and "bottom", as used in the description below, are to be understood to refer to directions as seen in the accompanying drawings.

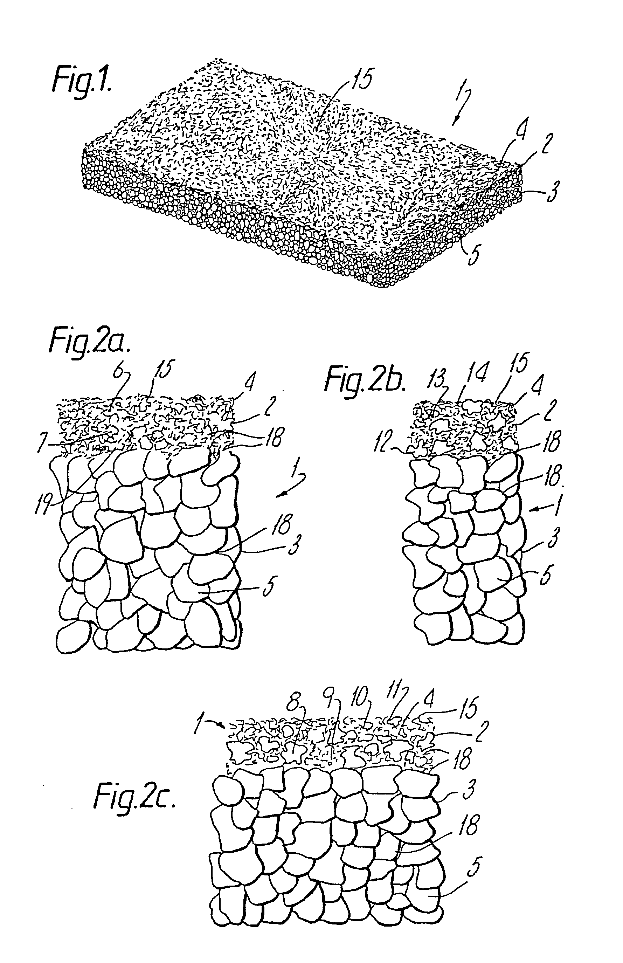

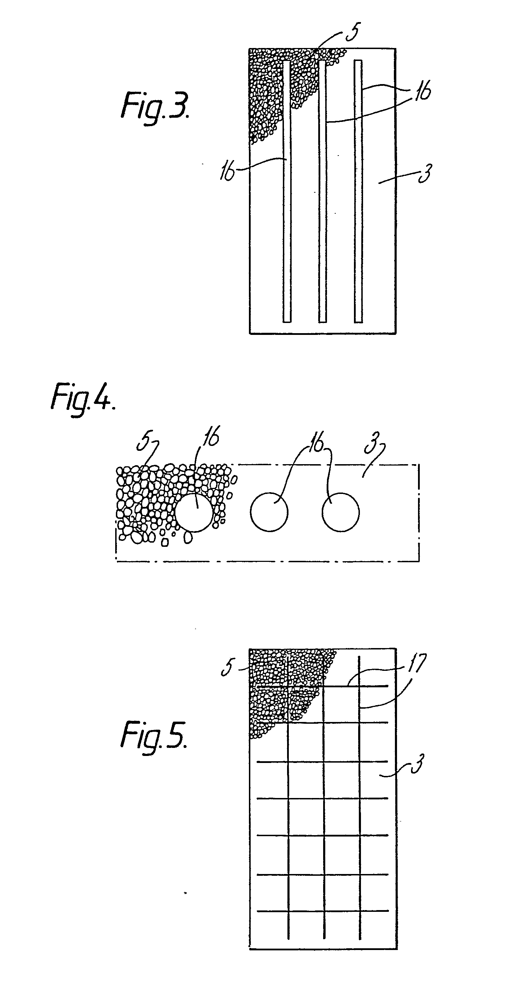

In Figures 1 and 2 there is shown a rigid filter plate 1 for sludge dewatering according to the present invention. The filter plate 1 is a monolithic structure comprising at least two layers, the top layer of the filter plate being a relatively thin filtering element 2, and the bottom layer being a relatively thick particulate supporting element 3. While, if desired, additional layers may be added to the plate for support, leveling, or other reasons, such is not necessary.

The filtering element 2 is a flat, relatively thin layer comprised of at least two sizes of jagged, irregular hard inert particles 4 adhesively bonded together by an adhesive bonding agent 18, with increasing average particle size progressing from an exposed dense upper surface 15 of the filtering element 2 to a lower surface 19 of the filtering element 2. The particles 4 are of a material or materials whose hardness on the Moh scale is at least 7. The supporting element 3 has particles 5, conveniently of substantially uniform size which are larger than the largest particles in the filtering element 2 and which are bonded together and to the lower surface 19 of the filtering element 2 by an adhesive bonding agent 18.

The filtering element 2 may range in thickness from about 1/8 inch (0.32 cms) to about 2 inches (5.08 cms) and is preferably about 1/4 inch (0.64 cms) thick. The jagged, irregular hard particles 4 of the filtering element 2 are of at least two sizes whose average diameter is substantially within the range 0.01 cms to 0.221 cms (i.e. from about 8 to about 100 grid). While small amounts of particles outside this size range may be included without deleterious effect, they provide no particular advantages.

Referring to Figure 2a, the filtering element may contain as few as two different particle sizes 6, 7, and referring to Figure 2c, as many as four 8, 9, 10, 11 or more different sizes. Three of sizes 12, 13, 14 are preferred, see Figure 2b, since this simultaneously provides good filter element integrity and satisfactory sludge dewatering rate. Four sizes of particles are required only for the dewatering of very fine sludges. Use of excessive amounts of small particles in the filtering element restricts the flow of filtrate and lengthens dewatering time. Representative sizes of particles which may be conveniently used in varying amounts in filtering elements intended for use with different sludges include 8, 10, 12, 16, 54 and 100 grid. "Grid" as used herein refers to American National Standard Institute (ANSI) grid size, in which, e.g. 8 grid particles have average diameter 0.087 inch (0.221 cms); 10 grid, 0.073" (0.1854 cms); 12 grid, 0.063 inch (0.16 cms), 16 grid 0.043 inch (0.11 cms), 54 grid, 0.012 inch (0.03 cms); 100 grid, 0.0048 inch (0.01 cms) etc.

With two or more and preferably three sizes of particles in the filtering element, a wider range of sludges may be dewatered using the rigid filter plate of the present invention as compared with filter media having a single size of particulate matter on the filtering surface. Types of sludges which may be dewatered with the filter plates of the present invention include municipal, water treatment and many industrial sludges ranging from 0.01% weight up to 10% weight solids or higher.

Referring to Figure 2b, a partial vertical cross-sectional view of one embodiment of the improved rigid filter plate 1 for sludge dewatering is shown. As illustrated in Figure 2b, three different sizes of particles 12, 13, 14 of progressively decreasing size are used in the filtering element 2, and a greater percentage of the smaller jagged, irregular hard particles 14 are found near the exposed upper (filtering) surface of the element. Proceeding through the filtering element toward the supporting element, a greater number of the larger sizes 12, 13 of jagged, irregular hard particles are encountered. Put differently, the average particle size increases proceeding from the upper surface 15 toward the lower surface 19 of the filtering element 2.

However, distinct strata do not appear, and some particles of each size appear at each level. Figures 2a and 2c illustrate this same point for filtering elements having two sizes 6, 7 and four sizes 8, 9, 10, 11 of particles, respectively.

The filter plate 1 possesses an unusually dense upper surface 15 that has few, if any, large valleys or crevices in which larger sludge masses could be trapped. This more uniform upper surface 15 does not destroy the secondary filtering ability of the filtering element 2. That is, the filtering element 2 is still able to trap large sludge masses early in the sludge dewatering process, which then act themselves as an additional level of filter, even though the sharp, upwardly extending points of the upper surface 15 are then less prominent.

Furthermore, the upper surface 15 is durable and resists flaking and chipping. While applicants should not be held to any specific explanation for this phenomenon, it is believed that it may result from the increased number of contact points between different sized particles, resulting in increased points of bonding between them. Thus, even though the filtering element 2 may only be about 1/4 inch (0.64 cms) thick, it is able to stand up to repeated scraping during sludge removal.

The denser, more filled-in upper surface 15 of the filtering element 2 permits easier and more complete removal of the dried sludge from the filter surface because there are fewer crevices where sludge could remain embedded during removal operations.

The particles of the filtering element 2, in addition to having a jagged, irregular external form, must be very hard in order to withstand repeated sludge removal and cleaning of the filter upper surface. The particles are preferably selected from the group consisting of aluminium oxide, corundum, emery, garnet, silicon carbide, boron carbide, and manufactured crystalline alumina products sold under various trade names such as Borolon (Abrasive Co.), Aloxite (Carborundum Co.), Lionite (General Abrasive Co.) and Alundum (Norton Co.). Each of these materials has a Mohs hardness of about 7.5 or greater. Reported Moh hardness for corundum is 9, for emery 9, for garnet 7.5+, for silicon carbide 9.3 to 9.7, for boron carbide 9.5 to 9.8, and for crystalline alumina 9. Each of these materials as commercially available for abrasive use is composed of jagged, irregular particles. In contrast, silica sand is of high hardness but is composed of particles which are too rounded, i.e. insufficiently jagged for use in the present invention.

The supporting element 3 is preferably about 1/4 inch (0.64 cms) to about 3—3/4 inches (9.53 cms) thick. The particles 5 which are adhesively bonded together to constitute the supporting element 3 are conveniently substantially uniform in size, but may vary in diameter, and will preferably be within the range of from about 1/8 inch (0.32 cms) to about 1—1/2 inches (3.81 cms). The supporting element 3 may also incorporate a reinforcing means within it, such as reinforcing bars or metal mesh. Examples of reinforcing means, illustrated in Figures 3—5, are steel rods 16 at least 3/8 inch (0.95 cms) in diameter spaced 6 inches (15.24 cms) apart, or steel mesh 6 inches by 6 inches (15.24 cms by 15.24 cms) 17, (In Figures 3—5 only a portion of the particles of the supporting element 3 are depicted for purposes of clarity. Naturally, in actual fact, the particles are distributed throughout the supporting element 3). Preferably, the reinforcing means is situated in about the center or bottom of the vertical dimension (thickness) of the supporting element 3. The particulate material used in the supporting element 3 is preferably washed and kiln dried pea gravel such as Chattahoochie gravel.

The particles within each layer and the layers themselves are bonded together with an adhesive bonding agent 18. The adhesive bonding agent is preferably a low viscosity epoxy resin and hardener product such as that marketed under the trade name Futura Bond by Dow Chemical Co. In geographical areas where the filter plates will be exposed to high ambient temperatures, e.g. 90°F (32.22°C) in use, resulting in plate temperatures of as high as 140°F (60°C) an expoxy intended for high temperature applications should be employed to avoid bending of the filter plates. Where the filter plates are to be used in drinking water treatment plants, the epoxy employed should be selected from among those approved as non-toxic.

In general, the method of manufacturing the rigid filter plates of the present invention involves placing the supporting element particles mixed with an adhesive bonding agent into a filter plate mould to form the supporting element first, followed by tamping. Then two or more sizes of jagged, irregular hard particles are mixed with an adhesive bonding agent and added to the filter plate mould on top of the supporting element layer and the entire mixture is carefully smoothed and tamped.

The supporting element mixture is made by mixing a low viscosity epoxy and hardener until the proper viscosity has been reached, and then mixing a quantity of inert particles, preferably washed and kiln dried gravel or aggregate, conveniently of substantially uniform size, within the range of 1/8 inch (0.32 cms) to 1½ inch (3.81 cms) diameter, with the adhesive bonding agent. The appropriate weight ratio of particles to adhesive bonding agent ranges from 6:1 to 15:1. The appropriate ratio varies with the size of the particles; too much bonding agent fills the interstices between the particles, giving a solid mass with no flow-through of filtrate permitted, too little gives a weak supporting layer due to lack of bonding at some of the contact points between the particles. The supporting element mixture is then poured into the filter plate mould, for example, a heavy tool steel mould measuring 2 feet by 4 feet (60.96 cms by 121.92 cms) to a depth of preferably about 1/4 inch (0.64 cms) to about 3—3/4 inches (9.53 cms). Should a reinforced filter plate be desired, reinforcing means such as reinforcing rods or sections of metal mesh treated to remove scale and prevent rust (e.g. by dipping in epoxy) are placed in the mould, preferably after pouring in about half the supporting element mixture, and the remaining supporting element mixture is added thereafter. The mixture is then tamped.

The filtering element mixture is made by mixing the epoxy and hardener as described above and combining it with a quantity of jagged, irregular hard particles of at least two sizes selected from the range consisting essentially of 8 grid to 100 grid (average diameter size 0.01 to 0.221 cms). The compositions of the particles are as described above. The appropriate weight ratio of particles to adhesive bonding agent ranges from 8:1 to 20:1. The exact amount to be used for any particular applications should be determined in accordance with the same considerations set forth for the supporting element. The resulting mixture is poured into a filter plate mould, to a depth of about 1/8 inch (0.32 cms) to about 2 inches (5.08 cms), on top of the supporting element. As the mixture of filtering element particles and adhesive bonding agent is poured onto the supporting element layer, the particles will fit into any gaps between the comparatively larger particles of the supporting element, resulting in a degree of "interlocking" between the two layers and yielding a tighter bond. See Figure 2.

The final steps of the process include smoothing the upper surface of the filter plate carefully with smoothing means, for example by drawing a levelled metal bar across the surface, tamping the surface carefully to align the particles, and permitting the plate to cure.

A plurality of rigid filter plates made by the above-described process may be used in a dewatering system for semi-liquid sludge. The dewatering system comprises a liquid impermeable container having a sidewall construction defining an upwardly open box-like area. Although the filter plates may be placed directly on the floor of this container without any other support, typically, 1 to 1½ inch (2.54 to 3.81 cms) diameter stone is laid down on the floor of this container and vibrated or keyed into position. On top of this may be placed 1 inch (2.54 cms) kiln dried gravel sprayed with a thinned epoxy (e.g. Futura Bond thinned with xylene) to set the upper surface and give a hard base. Then an additional 1 inch (2.54 cms) of levelling gravel is put down to compensate for any irregularity in the bottom surfaces of the filter plates. The filter plates are preferably installed by laying them edge to edge, and the joints between the plates are filled with a sealant (e.g. epoxy with silica sand filler) and/or an expansion material. Installation is facilitated by the rigorously flattened upper surface of the filter plates, which permits exact matching of plate level as the plates are laid edge to edge. The result is an uninterrupted smooth filter surface across the sludge container.

The process of dewatering sludge in which the filter plates of the present invention may be used would typically comprise: (a) where required, pretreating the sludge to coagulate and floc it to form soft sludge masses of various sizes, including larger and smaller sludge masses; (b) passing the flocced sludge onto the upper surfaces of the filter plate; (c) permitting the larger sludge masses to settle by force of gravity so that they are impaled on the jagged, irregular projections of the particles on the upper surfaces of the filtering elements and form a layer over the top of the filter plates; (d) thereafter applying a vacuum, preferably of between 1 and 27 inches (2.54 and 68.58 cms) of mercury and most preferably of between 10 and 15 inches (25.4 and 38.1 cms) of mercury, of sufficient strength to draw filtrate from the sludge through the layer of larger sludge masses on the surfaces of the filter plates and through the filter plates, but not so strong as to break down the larger sludge masses, such that the smaller sludge masses are trapped by the already settled larger sludge masses, until the sludge is dewatered to an extent making it removable by mobile disposal means; (e) removing the sludge from the surfaces of the filter plates by mobile disposal means; and (f) cleaning off the upper surfaces of the filter plates by spraying, hosing down, or other such means. Backwashing of the filter plates is not generally required.

The rigid filter plate disclosed herein provides some distinct advantages when used with the sludge dewatering system described above. The hard, dense, uniformly compacted filter surface 15 lends strength and durability to the plate permitting mechanized sludge removal by heavy equipment which traverses the filter plate surface, without chipping or flaking of the surface. Examples of equipment which might be used to remove the sludge include front end loaders, vacuums, shovels, and mechanized scrapers. Examples of equipment which may be used to clean off the plate upper surface include hoses and mechanized sprayers.

The rigid filter plate of the present invention provides fast and efficient sludge dewatering for a wide variety of sludges, while requiring substantially smaller amounts of polymer agent used to coagulate and floc the sludge to be filtered. The filter plate of the present invention also permits easier and more complete removal of the dried sludge cake from the filter surface.

The rigid filter plate described above is capable of application in a wide variety of sludge dewatering operations. Wide flexibility of application is achieved by varying the distribution of sizes of the jagged, irregular hard particles in the filtering element. Each sludge to be dewatered should be analyzed for type and particle size. In general, the finer the sludge (the smaller the sludge particles) the smaller the sizes of particles which should be used in the filtering element to yield a particular cleanliness of filtrate. This is usually the case for less concentrated sludges also. The selection of filter plate compositions for various sludge dewatering applications are illustrated by the following examples.

Example I

Particle size and water retention are determined for municipal sludge, i.e. aerobic, anaerobic, waste activated or food processing sludge. A rigid filter plate to dewater such sludge utilizes a filtering element composed of jagged, irregular aluminium oxide particles where 90% of the particles are 16 grid (average diameter size 0.11 cms) and 10% of the particles are 54 grid (average diameter size 0.03 cms). Another distribution of aluminium oxide particles where 70% of the particles are 16 grid (average diameter size 0.11 cms) 20% of the particles are 54 grid (average diameter size 0.03 cms), and 10% of the particles are 100 grid (average diameter size (0.01 cms) is also successful in municipal sludge dewatering systems. This type of rigid filter plate is classified for convenience as a coarse filter.

Example II

For fine particle sludge such as water treatment plant, sludge, metal sludge, and galvanizing plant sludges, (e.g. lime, alum and other metal hydroxide sludges), a number of filtering element compositions can be successfully employed for various sizes and shapes of sludge particles. One such composition is an aluminium oxide layer where 10% of the particles are 16 grid (average diameter size 0.11 cms), 60% of the particles are 54 grid (average diameter size 0.03 cms) and 30% of the particles are 100 grid (average diameter size 0.01 cms). Another distribution uses aluminium oxide particles where 20% are 16 grid, 70% are 54 grid, and 10% are 100 grid (with average diameter sizes of 0.11 cms, 0.03 cms, and 0.01 cms respectively). A third, comprising three sizes of aluminium oxide particles where 45% of the particles are 16 grid, 45% of the particles are 54 grid, and 10% of the particles are 100 grid (with average diameter sizes of 0.11 cms, 0.03 cms, and 0.01 cms respectively) is classified for convenience as a fine filter.

Example III

To dewater tin and zinc mine tailings, sand and gravel slimes, and sulphur dioxide scrubber sludges the filtering element is composed of corundum, emery, or garnet particles where 10% of the particles are 12 grid, 40% of the particles are 16 grid, 40% of the particles are 54 grid, and 10% of the particles are 100 grid (with average diameter sizes of 0.16 cms, 0.11 cms, 0.03 cms and 0.01 cms respectively). The supporting element particulate matter is of diameter 1/8 inch (0.32 cms) to 1 inch (2.54 cms).

Example IV

A filtering element of manufactured crystalline alumina particles where 40% are 12 grid, 40% are 16 grid, 10% are 54 grid, and 10% are 100 grid (with average diameter sizes of 0.16 cms, 0.11 cms, 0.03 cms and 0.01 cms respectively) can be used to dewater phosphate slimes. Sizes of the particulate matter in the supporting element are 1/8 to 1 inch (0.32 cms to 2.54 cms). Phosphate slimes can also be dewatered using the filter plate of Examples III or V.

Example V

Paper mill sludges and biomass/alcohol production sludges are efficiently dewatered using a filtering element composed of silicon carbide or boron carbide particles where 80% of the particles are 12 grid, 10% of the particles are 54 grid, and 10% of the particles are 100 grid (having average diameter sizes of 0.16 cms, 0.03 cms and 0.01 cms respectively). Sizes of the particulate matter in the supporting elements are 1/8 to 1 inch (0.32 cms to 2.54 cms).

Example VI

Using a filtering element of aluminium oxide particles where 20% of the particles are 16 grid, 70% of the particles are 54 grid, and 10% of the particles are 100 grid (having average diameter sizes of 0.11 cms, 0.03 cms and 0.01 cms respectively) the rigid filter plate of the present invention is capable of dewatering four types of coal slimes ranging from chunk coal to very fine coal having 70% suspended solids less than 60 μm in diameter.

Example VII

An aerobic sludge of solids content 1.8% is treated with 50 ml Nalco 7120 polymer at 5% dilution. The flocced sludge is dewatered over a filter plate of the present invention having jagged, irregular aluminium oxide particles in which 45% are 16 grid, 45% are 54 grid, and 10% are 100 grid (having average diameter sizes of 0.11 cms, 0.03 cms and 0.01 cms respectively) The filtrate is very clear throughout the dewatering process, and the solids content of the dried sludge is 16.3% at 24 hours.

Sludge test data for Example VII
Type of Sludge filtered: Aerobic
Polymer Coagulant used: 50 ml Nalco
7120 (5% dilution)

| Elapsed filtering time | Relative sludge height (cm) |
|---|---|
| 0 min. | 24.5 |
| 5 min. | 20.8 |
| 10 min. | 19.7 |
| 15 min. | 18.8 |
| 20 min. | 18.0 |
| 25 min. | 17.2 |
| 30 min. | 16.5 Vacuum on |
| 35 min. | 15.5 |
| 40 min. | 14.3 |
| 45 min. | 13.4 |
| 1 hour 35 min. | 7.4 |
| 1 hour 50 min. | 6.6 |
| 2 hours | 5.9 |
| 2 hours 15 min. | 5.4 |
| 2 hours 25 min. | 5.1 Vacuum off |
| 2 hours 30 min. | 5.0 |
| 2 hours 45 min. | 5.0 |
| 3 hours | 5.0 |
| 23 hours | 5.0 |
| 24 hours | 5.0 |

Solids content at 0 min: 1.8%
at 24 hours: 16.3%

Comparative Example VIII

A filter plate is moulded with at least one supporting layer and filtering layer of 16 grid anthracite (having particles of average diameter size 0.11 cms) bonded with epoxy. A plurality of such filter plates, which are not in accordance with the present invention, are installed and used repeatedly for sludge dewatering. Removal of the dried sludge with front end loaders results in chipping and flaking of the upper surfaces of the filtering elements, so that bare spots rapidly appear. Cleaning of the surface with water under high pressure also flakes off anthracite particles.

In contrast, under comparable conditions of use, the filter plate of Example VII remains intact.

Comparative Example IX

A filter plate is moulded with at least one supporting layer and a filtering layer which consists entirely of 16 grid aluminium oxide (having particles of average diameter size 0.11 cms) bonded with epoxy. A plurality of such plates, which are not in accordance with the present invention, are installed and used repeatedly for sludge dewatering. Removal of the dried sludge with front end loaders results in chipping and flaking of the upper surfaces of the filtering elements, so that bare spots rapidly appear. Cleaning of these upper surfaces with water under high pressure also flakes off aluminium oxide particles.

Under comparable conditions of use, the filter plate of Example VII remains intact.

The following example illustrates the structural strength of the filter plates of the present invention.

Example X

Tests on a rigid filter plate according to the present invention measuring 4 feet by 2 feet by 2 inches (121.92 cms) by 60.96 cms by 5.08 cms) without a reinforcing means in a flexural type mode with reaction blocks on 25 cm from centre and top loading block midway between the reaction blocks revealed that the filter plate could withstand 3,000 pounds (1361 Kg) of flexural stress before failure. With a reinforced supporting element, the tests conducted on a 4 feet by 2 feet by 2 inch (121.92 cms by 60.96 cms by 5.08 cms) filter plate with reinforcing means of 1/2 inch (1.27 cms) steel rods or 6 inch by 6 inch (15.24 cms by 15.24 cms) steel mesh revealed strength ranging from 4,400 pounds to 14,900 pounds (1996 to 6759 Kg) before failure. In addition, tests conducted on a 7.5 inch (19.05 cms) diameter round section of the unreinforced filter plate revealed a compressibility strength ranging from 1,660 psi to 3,072 psi (116.7 to 215.96 kg/sq cm or 11444 to 21178 kPa).

Satisfactory integrity of the rigid filter plates of the present invention in winter climates and compatability of the expansion-contraction ratios of the plates with other building materials, e.g., concrete, glass, steel and fiberglass, have also been demonstrated.

**Claims**

1. A rigid sludge-dewatering filter plate (1) comprising at least a first layer (2) and a second layer (3), the first layer (2) constituting a flat filtering element consisting essentially of jagged irregular particles (4) and the second layer (3) constituting a particulate support for the first layer (2), characterised in that the particles (4) of the first layer are of a material or materials whose hardness on the Mohs scale is at least 7 and which are bonded together with an adhesive bonding agent (18), the particles (4) being of at least two sizes whose average diameter is within the range 0.01 cm to 0.23 cm and being arranged with the average particle size of the particles (4) being less at an exposed dense upper surface (15) of the first layer (2) than at a lower surface (19) thereof, the second layer (3) having particles (5) which are larger than the largest particles in the first layer (2) and the particles (5) of the second layer (3) being bonded together and to the lower surface (19) of the first layer (2) by an adhesive bonding agent (18).

2. A plate as claimed in claim 1 characterized in that the jagged irregular particles (4) of the first layer (2) are of one or more of the materials aluminium oxide, corundum, emery, garnet, silicon carbide, boron carbide, and manufactured crystalline alumina products.

3. A plate as claimed in claim 1 or 2 characterised in that the jagged, irregular particles (4) comprise at least three different sizes of particles.

4. A plate as claimed in any preceding claim characterised in that the thickness of the first layer (2) is substantially in the range of 0.32 cm to 5.08 cm.

5. A plate as claimed in any preceding claim characterised in that the thickness of the second layer (3) is substantially in the range of 0.64 cm to 9.53 cm.

6. A plate as claimed in any preceding claim characterised in that the diameters of the particles (5) of the second layer (3) are in the range of 0.32 cm to 3.81 cm.

7. A plate as claimed in any preceding claim characterised in that the second layer (3) is reinforced with reinforcing means (16).

8. A plate as claimed in any preceding claim characterised in that the adhesive bonding agent is a mixture of a low viscosity epoxy resin and a hardener.

9. A plate as claimed in any preceding claim characterised in that the weight ratio of adhesive bonding agent (18) to particles (4) in the first layer (2) is substantially between 1:8 and 1:20, and the weight ratio of adhesive bonding agent (18) to particles (5) in the second layer (3) is substantially between 1:6 and 1:15.

10. A method of manufacturing a rigid sludge dewatering filter plate as claimed in any preceding claim, characterised in that the method comprises: (a) mixing an adhesive bonding agent (18) with inert particles (5) of diameter greater than 0.23 cm to form a supporting element mixture; (b) introducing the supporting element mixture into a filter plate mould to a predetermined depth; (c) tamping the supporting element mixture in the mould; (d) mixing an adhesive bonding agent (18) with jagged, irregular particles (4) of at least two sizes within the range consisting essentially of 0.01 cm to 0.23 cm, wherein the particles are comprised of one or more materials whose hardness on the Moh scale is at least 7, to form a filtering element mixture; (e) introducing the filtering element mixture into the filter plate mould on top of the tamped supporting element mixture, (f) smoothing the upper surface of the filtering element mixture with smoothing means (g) tamping the filtering element mixture in the mould; and (h) curing the resulting filter plate.

11. A method as claimed in claim 10 characterised by mixing a low viscosity epoxy resin with a hardener to form the adhesive bonding agent employed in steps (a) and (d).

12. A method as claimed in claim 10 or 11 characterised in that the jagged, irregular particles (4) of the filtering element mixture are of aluminium oxide.

13. A method as claimed in any of claims 10 to 12 characterised by introducing a portion of the supporting element mixture into the filter plate mould, introducing reinforcing means on top of this, and then introducing the remainder of the supporting element mixture on top of the reinforcing means.

## Patentansprüche

1. Fest Filterplatte (1) zur Schlammentwässerung, mit wenigstens einer ersten Lage (2) und einer zweiten Lage (3), wobei die erste Lage (2) ein im wesentlichen aus zackigen, unregelmäßigen Partikeln (4) bestehendes flaches Filterungselement und die zweite Lage (3) eine Partikelstütze für die erste Lage (2) bildet, dadurch gekennzeichnet, daß die Partikeln (4) der ersten Lage aus einem Material oder Materialien bestehen, deren Häute auf der Mohs-Skala wenigstens 7 ist und die mit einem haftenden Bindemittel (18) miteinander verbunden sind, daß die Partikeln (4) wenigstens zwei Grössen aufweisen, deren mittlerer Durchmesser im Bereich von 0,01 cm bis 0,23 cm liegt und die so angeordnet sind, daß die mittler Partikelgröße der Partikeln (4) an einer freiliegenden dichten oberen Oberfläche (15) geringer ist, als bei einer tieferliegenden Oberfläche (19) der ersten Lage (2), daß die zweite Lage (3) Partikeln (5) aufweist, die größer sind als die größten Partikeln in der ersten Lage (2) und daß die Partikeln (5) der zweiten Lage (3) durch ein haftendes Bindemittel (18) miteinander und mit der tieferliegenden Oberfläche (19) verbunden sind.

2. Platte nach Anspruch 1, dadurch gekennzeichnet, daß die zackigen, unregelmäßigen Partikeln (4) der ersten Lage (2) aus einem oder mehreren der Materialien wie Aluminiumoxid, Korund, Schmirgel, Granat, Siliziumkarbid, Borkarbid und hergestellten kristallinen Tonerdeprodukten bestehen.

3. Platte nach Anspruch 1 oder, 2, dadurch gekennzeichnet, daß die zackigen, unregelmäßigen Partikeln (4) wenigstens drei verschiedene Partikelgrössen aufweisen.

4. Platte nach einem der vorhergehenden Ansprüche dadurch gekennzeichnet, daß die Dicke der ersten Lage (2) im wesentlichen im Bereich von 0,32 cm bis 5,08 cm liegt.

5. Platte nach einem der vorhergehenden Ansprüche, dadurch gekennzeichnet, daß die Dicke der zweiten Lage (3) im wesentlichen im Bereich von 0,64 cm bis 9,53 cm liegt.

6. Platte nach einem der vorhergehenden Ansprüche, dadurch gekennzeichnet, duß die Durchmesser der Partikeln (5) der zweiten Lage (3) im Bereich von 0,32 cm bis 3,81 cm liegen.

7. Platte nach einem der vorhergehenden Ansprüche, dadurch gekennzeichnet, daß die zweite Lage (3) durch ein Verstärkungsmittel (16) verstärkt ist.

8. Platte nach einem der vorhergehenden Ansprüche, dadurch gekennzeichnet, daß das haftende oder adhäsive Bindemittel eine Mischung aus einem Epoxidharz niedriger Viskosität und einem Härter ist.

9. Platte nach einem der vorhergehenden Ansprüche, dadurch gekennzeichnet, daß das Gewichtsverhältnis zwischen dem haften Bindemittel (18) und den Partikeln (4) in der ersten Lage (2) im wesentlichen zwischen 1:8 und 1:20 liegt, und daß das Gewichtsverhältnis zwischen dem haftenden Bindemittel (18) und den Partikeln (5) in der zweiten Lage (3) im wesentlichen zwischen 1:6 und 1:15 liegt.

10. Verfahren zur Erzeugung einer festen Filterplatte zur Schlammentwässerung nach einem der vorhergehenden Ansprüche, dadurch gekennzeichnet, daß das Verfahren enthält:

(a) Mischen eines haftenden Bindemittels (18) mit inerten Partikeln (5) mit einem Durchmesser größer als 0,23 cm zur Bildung einer Stützelementmischung;

(b) Einbringen der Stützelementmischung in eine Filterplattenform bis zu einer vorbestimmten Tiefe;

(c) Feststampfen der Stützelementmischung in der Form;

(d) Mischen eines haften Bindemittels (18) mit zackigen, unregelmäßigen Partikeln (4) von wenigstens zwei Größen im Bereich von im wesentlichen 0,01 cm bis 0,23 cm, wobei die Partikeln aus einem oder mehreren Materialien bestehen, deren Härte auf der Mohs-Skala wenigstens 7 ist, zur Bildung einer Filterungselementmischung;

(e) Einbringen der Filterungselementmischung in die Filterplattenform auf der Oberseite der festgestampften Stützelementmischung;

(f) Glätten der oberen Oberfläche der Filterungselementmischung mit einem Glättungsmittel;

(g) Feststampfen der Filterungselementmischung in der Form; und

(h) Härten der resultierenden Filterplatte.

11. Verfahren nach Anspruch 10, gekennzeichnet, durch Mischen eines Epoxidharzes niedriger Viskosität mit einem Härter zur Bildung eines bei den Schritten (a) und (d) verwendeten haftenden Bindemittels.

12. Verfahren nach Anspruch 10 oder 11, dadurch gekennzeichnet, daß die zackigen, unregelmäßigen Partikeln (4) der Filterungselementmischung aus Aluminiumoxid bestehen.

13. Verfahren nach einem der Ansprüche 10 bis 12, gekennzeichnet durch Einbringen eines Teils der Stutzelementmischung in die Filterplattenform, Einbringen eines Verstärkungsmittels auf die Oberseite dieses Teils, und dann durch Einbringen der übrigen Stützelementmischung auf der Oberseite des Verstärkungsmittels.

## Revendications

1. Plaque filtrante rigide (1) de déshydratation de boues comprenant au moins une première couche (2) et une seconde couche (3), la première couche (2) constituant un élément plat de filtration formé essentiellement de particules irrégulières déchiquetées (4) et la seconde couche (3) constituant un support particulaire pour la première couche (2), caractérisée en ce que les particules (4) de la première couche sont formées d'une ou plusieurs matières dont la dureté sur l'échelle Moh est au moins égale 7 et qui sont liées les unes aux autres par un liant adhésif (18), les particules (4) ayant au moins deux tailles dont le diamètre moyen est compris entre 0,01 et 0,23 cm et étant disposées de manière que la dimension particulaire moyenne des particules (4) soit plus faible à une face supérieure dense exposée (15) de la première couche (2) qu'à une face inférieure (19) de cette couche, la seconde couche (3) ayant des particules (5) plus grosses que les plus grosses particules de la première couche (2), et les particules (5) de la seconde couche (3) étant liées les unes aux autres et à la face inférieure (19) de la première couche (2) par un liant adhésif (18).

2. Plaque selon la revendication 1, caractérisée en ce que les particules irrégulières déchiquetées (4) de la première couche (2) sont formées d'une ou plusieurs matières choisies parmi l'oxyde d'aluminium, le corindon, l'émeri, le grenat, le carbure de silicium, le carbure de bore et les produits manufacturés d'alumine cristalline.

3. Plaque selon l'une des revendications 1 et 2, caractérisée en ce que les particules irrégulières déchiquetées (4) comportent au moins trois tailles différentes de particules.

4. Plaque selon l'une quelconque des revendications précédentes, caractérisée en ce que l'épaisseur de la première couche (2) est sensiblement comprise entre 0,32 et 5,08 cm.

5. Plaque selon l'une quelconque des revendications précédentes, caractérisée en ce que l'épaisseur de la seconde couche (3) est pratiquement comprise entre 0,64 et 9,53 cm.

6. Plaque selon l'une quelconque des revendications précédentes, caractérisée en ce que les diamètres des particules (5) de la seconde couche (3) sont compris entre 0,32 et 3,81 cm.

7. Plaque selon l'une quelconque des revendications précédentes, caractérisée en ce que le seconde couche (3) est renforcée par un dispositif d'armature (16).

8. Plaque selon l'une quelconque des revendications précédentes, caractérisée en ce que le liant adhésif est un mélange d'une résine époxyde de faible viscosité et d'un durcisseur.

9. Plaque selon l'une quelconque des revendications précédentes, caractérisée en ce que le rapport pondéral du liant adhésif (18) aux particules (4) de la première couche (2) est pratiquement compris entre 1/8 et 1/20, et le rapport pondéral du liant adhésif (18) aux particules (5) de la seconde couche (3) est pratiquement compris entre 1/6 et 1/15.

10. Procédé de fabrication d'une plaque rigide de filtration de déshydratation des boues selon l'une quelconque des revendications précédentes, caractérisé en ce que le procédé comprend (a) le mélange d'un liant adhésif (18) avec des particules inertes (5) de diamètre supérieur à 0,23 cm afin qu'un mélange pour élément de support soit formé, (b) l'introduction du mélange pour élément de support dans un moule de plaque filtrante, sur une hauteur prédéterminée, (c) le tassement du mélange pour élément de support dans le moule, (d) le mélange d'un liant adhésif (18) à des particules irrégulières déchiquetées (4) ayant au moins deux tailles comprises dans la plage allant pratiquement de 0,01 à 0,23 cm, les particules étant formées d'une ou plusieurs matières dont la dureté sur l'échelle Moh est au moins égale à 7, afin qu'un mélange pour élément filtrant soit formé, (e) l'introduction du mélange pour élément filtrant dans le moule de plaque filtrante à la partie supérieure du mélange tassé pour élément de support, (f) le lissage de la face supérieure du mélange pour élément filtrant avec un dispositif de lissage, (g) le tassement du mélange pour élément filtrant dans le moule et (h) le durcissement de la plaque filtrante résultante.

11. Procédé selon la revendication 10, caractérisé par le mélange d'une résine époxyde de faible viscosité avec un durcisseur afin qu'un liant adhésif utilisé dans les étapes (a) et (d) soit formé.

12. Procédé selon l'une des revendications 10 et 11, caractérisé en ce que les particules irrégulières déchiquetées (4) du mélange pour élément filtrant sont formées d'oxyde d'aluminium.

13. Procédé selon l'une quelconque des revendications 10 à 12, caractérisé par l'introduction d'une partie du mélange pour élément de support dans le moule de plaque filtrante, l'introduction d'un dispositif d'armature au-dessus de cette partie de mélange, puis l'introduction du reste du mélange de support sur le dispositif d'armature.

Fig.1.

Fig.2a.

Fig.2b.

Fig.2c.

Fig.3.

Fig.4.

Fig.5.